# FASCICULE DE BREVET EUROPEEN

(11) **EP 2 202 264 B1**
(45) Date de publication et mention de la délivrance du brevet: **18.04.2018**
(21) Numéro de dépôt: 08172881.8
(22) Date de dépôt: 24.12.2008
(51) Int. Cl.: F01D 5/00, C08J 9/26, F01D 11/12, B29C 44/06, B29C 44/56, F01D 9/04

(54) **Procédé de fabrication par moulage d'un élément structurel de machine avec une surface abradable**
Herstellungsverfahren durch Formung eines Strukturelements einer Maschine mit Abrieboberfläche
Method for manufacturing by moulding a structural element of a machine with an abradable surface

(43) Date de publication de la demande: 30.06.2010
(73) Titulaire: Safran Aero Boosters SA, 4041 Herstal (BE)
(72) Inventeur: Schuster, Laurent, 6997 Erezée (BE)
(74) Mandataire: Lecomte & Partners

(56) Documents cités:
- EP-A- 0 414 570
- EP-A- 0 437 136
- DE-A1- 3 404 479
- US-A- 5 388 959
- US-A- 5 759 019

## Description

### Domaine technique

L'invention a trait à un procédé de fabrication d'un élément structurel en matériau composite avec une surface de friction, plus particulièrement à un procédé de fabrication par moulage d'un élément structurel tel qu'une virole d'un compresseur de turbomachine axiale. L'invention a trait également à un élément structurel tel qu'une virole d'un compresseur de turbomachine axiale.

### Etat de la technique antérieur

Le document EP 0 219 445 divulgue un procédé de fabrication d'un élément structurel de turbomachine. Plus précisément, il divulgue une virole interne d'une grille redresseur d'un compresseur d'une turbine axiale. La virole interne est en matériau composite et est constituée d'un anneau interne en structure laminée comprenant des couches de fibres en polyamide Kevlar® noyées dans une résine époxy. La virole comprend également une série de tronçons gaufrés destinés à être collés à l'anneau interne et à recevoir les pieds d'aubes. Ces tronçons sont également en matériau composite consistant en des fibres de verres noyées dans une résine. Un joint coopérant avec deux nervures du rotor est rapporté à la surface intérieure de l'anneau interne. Ce joint forme avec les deux nervures un joint à labyrinthe. La construction de la virole interne composite de ce document est complexe car elle requiert la fabrication et l'assemblage de plusieurs éléments la constituant. L'enseignement de ce document est de plus limité à une virole interne.

Le document US 4 135 851 divulgue une garniture abradable d'une virole externe de compresseur ou de turbine axiale. La garniture est en forme d'anneau destiné à être inséré et puis fixé, par collage par exemple, à la virole vraisemblablement métallique. La garniture est formée d'un support en forme d'anneau comprenant des feuilles métalliques ondulées et d'une couche de matériau abradable fixée à la surface intérieure du support. Le support en feuilles métalliques ondulées permet de reprendre certaines déformations de la couche d'abradable, évitant ainsi d'éventuels dégâts aux têtes d'aubes du rotor et/ou à la virole lors de contact entre ces deux éléments durant le fonctionnement de la machine. Ce type de construction est également assez complexe car impliquant la réalisation de plusieurs éléments et de leur assemblage.

Différentes méthodes de fabrication de couche abradable sur une virole métallique de turbomachine sont connues.

Par exemple le document WO 2005/014979 divulgue un procédé permettant d'appliquer un matériau métallique sous forme de boue sur une surface par trempage, application au pinceau, par projection ou par déposition en phase vapeur et d'en contrôler la porosité durant la cuisson. Le matériau appliqué comprend des microbilles de plastiques. La couche appliquée devient poreuse durant la cuisson par vaporisation des microbilles. Ce procédé est cependant limité à la formation de couche abradable sur une virole métallique.

Le document de brevet EP 0 437 136 A2 divulgue un élément tel qu'une cage de roulement à bille, formé à partir de matériau plastique injecté avec un treillis métallique destiné à être ensuite dissous chimiquement en vue de rendre le matériau poreux. Le matériau est ainsi destiné à être imprégné de lubrifiant afin de présenter un coefficient de friction ainsi qu'une usure très faibles.

Le document de brevet EP 0 414 570 A2 divulgue un matériau composite de construction d'un carter de turbofan de turbomachine axiale. Ce matériau peut comprendre un matériau de charge tel que des billes de verre ou de manière préférentielle des fibres de verre en vue de le renforcer.

Le document US 5 388 959 divulgue un procédé de fabrication d'un élément structural de turbomachine, conformément à la revendication 1 et la revendication 6. Les enseignements détaillés ci-avant manquent de proposer une solution simple pour la réalisation d'un élément structurel composite, tel qu'une virole de turbomachine, ayant une surface abradable destinée à entrer en friction avec un élément mobile. En effet, les solutions proposées par ces enseignements prévoient au minimum l'application séparée d'une couche abradable de nature différente de l'élément structurel et par un procédé d'application différent de celui de la fabrication de l'élément en soi. De plus, une opération de sablage de la surface de l'élément sur laquelle l'abradable est appliqué est souvent nécessaire afin d'assurer un accrochage satisfaisant.

L'objectif de la présente invention consiste à proposer une solution plus simple et moins coûteuse pour la réalisation de tels éléments.

### Exposé de l'invention

L'invention consiste en un procédé de fabrication par moulage d'un élément structurel de stator de turbomachine axiale, conformément à la revendication 1.

Ce procédé permet de conférer à l'élément structurel des propriétés d'abradabilité directement lors de sa fabrication. Il permet de s'acquitter des difficultés de fabrication séparée de l'élément structurel et d'un élément abradable et d'assemblage et de traitement de surface associés lorsqu'une surface abradable est rapportée par collage par exemple à un élément structurel. L'élément structurel ainsi fabriqué présente de plus une adhésion de la couche abradable du niveau de la force de cohésion du matériau en question, étant en fait un matériau monobloc à gradient de propriétés.

Le matériau de charge comprend des particules solides et une membrane perméable à la résine et imperméable aux particules solides est placée dans le moule avant l'ajout du matériau de charge de sorte à limiter la présence du matériau de charge à proximité de la surface de friction de l'élément structurel.

Préférentiellement, la membrane comprend des fibres, préférentiellement des fibres de verre ou de carbone.

Préférentiellement, le matériau de charge comprend au moins un des matériaux suivants : microbilles, préférentiellement creuses, de verre ; talc.

Dans le cas de microbilles creuses de verre, la porosité est obtenue automatiquement.

Préférentiellement, le matériau de charge est tel qu'il se dégrade, préférentiellement qu'il passe en phase vapeur, lors du traitement thermique.

Préférentiellement, le matériau de charge comprend au moins un des matériaux suivants : microsphères de matériau thermoplastique, préférentiellement de PTFE ou tout autre polymère thermoplastique apte à passer en phase vapeur lors de la polymérisation de la résine.

Dans le cas de microbilles de polyester du type CAS 260-99-71-8, l'élévation de température due à la polymérisation suffit à la dégradation du matériau de charge, créant ainsi les porosités attendues.

L'invention a également pour objet un procédé de fabrication par moulage d'un élément structurel de stator de turbomachine axiale, conformément à la revendication 6.

Le procédé comprend une étape supplémentaire après le traitement thermique consistant à dissoudre le matériau de charge fibreux métallique, par application d'un bain chimique approprié.

Préférentiellement, les fibres du matériau de charge sont en aluminium et le bain chimique de dissolution est un bain alcalin fort, préférentiellement d'hydroxyde de sodium.

Préférentiellement, les fibres du matériau de charge sont en cuivre et le bain chimique de dissolution est un bain acide, préférentiellement d'acide chlorhydrique. Préférentiellement, l'élément structurel est une virole interne ou externe, préférentiellement de compresseur.

Préférentiellement, l'élément structurel est constitué de fibres structurantes, préférentiellement choisies parmi les suivantes : verre, carbone, métallique ; et de résine thermodurcissable.

Les caractéristiques de l'invention mentionnées ci-dessus, ainsi que d'autres, apparaîtront plus clairement à la lecture de la description suivante d'un exemple de réalisation, en se référant aux dessins annexés.

### Brève description des figures

La figure 1 est une vue schématique d'un élément structurel en forme d'anneau en cours de fabrication dans son moule et destiné à présenter une surface abradable à sa périphérie intérieure.
La figure 2a est une vue en coupe d'une section de l'anneau de la figure 1 avant traitement thermique.
La figure 2b est une vue en coupe d'une section de l'anneau correspondant à la figure 1 après traitement thermique et éventuellement après dissolution chimique.

### Mode de réalisation de l'invention

L'invention consiste en la mise à forme d'un élément structurel de machine en matériau composite et dont le matériau de sa surface abradable est venu de matière avec l'élément en soi. L'élément composite est typiquement mis à forme par moulage en déposant des nappes de fibres de renforcement et injection d'une résine dans le moule et ensuite par traitement thermique en vue de faire polymériser la résine. Un matériau de charge apte à conférer à la surface une propriété d'abradabilité est ajouté localement en surface lors de la mise en place des fibres et de la résine. La notion d'abradabilité est assimilable à une capacité de surface à être friable en très fine poussière lors de friction avec un élément en mouvement relatif. Typiquement une telle propriété peut être atteinte lorsque qu'une certaine porosité est atteinte dans le matériau constituant la surface en question.

Le matériau de charge est apte à générer une certaine porosité dans le matériau constituant de l'élément structurel en vue de conférer à la surface des propriétés d'abradabilité. Cette capacité du matériau de charge à générer une porosité est liée à sa composition chimique, à sa structure physique même ou encore à une combinaison des deux.

En effet, le matériau de charge peut être un composé chimique tel qu'il subisse un changement d'état comme une liquéfaction, une vaporisation ou même une sublimation à partir d'une certaine température qui soit atteinte lors du traitement thermique de polymérisation du matériau constituant l'élément structurel. Ce changement d'état du matériau de charge va générer un réseau de pores depuis la localisation du matériau de charge jusqu'à la surface. Ce réseau crée la porosité nécessaire à l'abradabilité de la surface.

Le matériau de charge peut également présenter une structure telle qu'il forme un réseau potentiel de micro canaux, comme par exemple des fibres, noyé dans le matériau au niveau de la surface. Ce réseau sera ensuite « pris » dans le matériau après polymérisation et pourra, après une élimination chimique, conférer à la zone de matériau en surface une porosité.

Le matériau de charge peut également être une combinaison de ces deux types, comme par exemple des microbilles creuses de polyester, c'est-à-dire apte à passer en phase gazeuse. Lors de la polymérisation de la résine de l'élément structurel, l'enveloppe des microbilles va passer en phase vapeur et tout en libérant les microbulles d'air comprises dans les microbilles creuses, va augmenter le volume total de porosité dans le matériau.

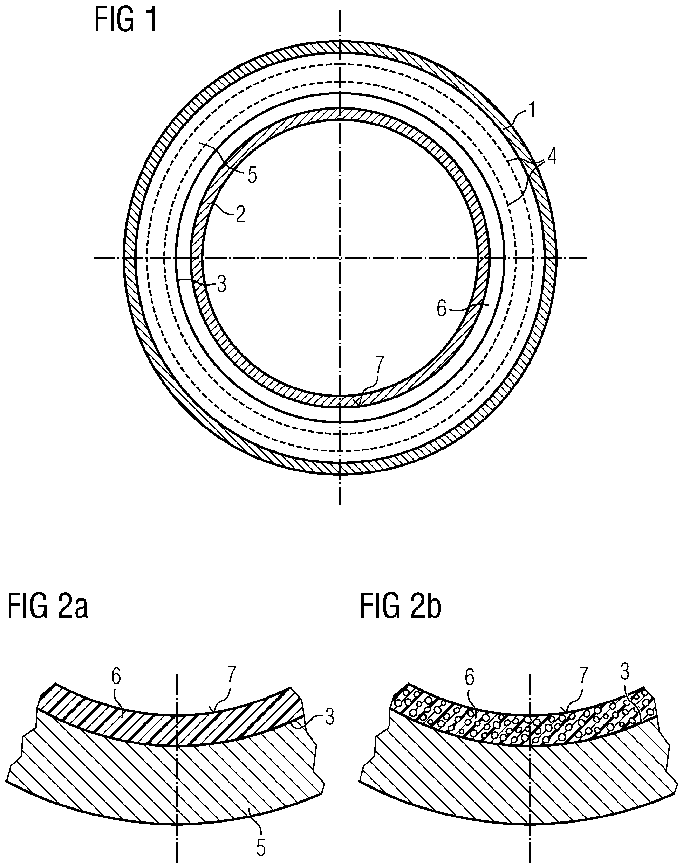

Un exemple de réalisation de l'invention est illustré aux figures 1, 2a et 2b. La figure illustre de manière schématique une vue en coupe d'une virole externe de compresseur de turbomachine axiale en phase de mise à forme. Une virole externe de compresseur de turbomachine a généralement une forme d'anneau structurel apte à être assemblé à d'autres composants du stator du compresseur. Sa surface interne constitue la partie de stator ou de carter pour la roue mobile correspondante du compresseur. La roue mobile est constituée d'une rangée d'aubes sur la périphérie du rotor constituant avec la grille redresseur statorique directement en aval un étage du compresseur. La surface interne de la virole entoure les aubes rotoriques et est susceptible d'entrer en contact avec les extrémités de celles-ci dans certaines conditions de fonctionnement. La surface interne de la virole doit donc présenter des propriétés d'abradabilité en vue d'éviter toute détérioration majeure des aubes ou de la virole en cas de contact. Le moule comprend une partie extérieure 1 pour la surface extérieure de la virole et une partie intérieure 2 pour la surface intérieure de la virole. La virole est typiquement constituée de matériau composite comprenant des fibres de renforcement telles que des fibres de verre ou de carbone et une résine thermodurcissable.

La fabrication de la virole composite a lieu comme suit. Une ou plusieurs nappes successives de fibres de renforcement 4 sont mises en place dans le moule. Une nappe de transition 3 est ensuite mise en place. Cette nappe est avantageusement du même type que les nappes de renforcement 4 mais joue un rôle particulier ici dans la mesure où la nappe 3 forme une séparation physique annulaire dans l'épaisseur de la virole. La résine, typiquement une résine thermodurcissable de type connu de l'homme de l'art, comme une résine époxy, est injectée dans le moule. Un matériau de charge apte à changer d'état lors de du traitement thermique postérieur est également injecté. Il peut être mélangé directement à la résine de sorte à ce qu'il soit injecté avec la résine. Il peut être également injecté séparément avant injection de la résine, en étant retenu par la nappe de transition 3, ou en fin d'étape d'injection de la résine ou encore il peut être injecté avec la résine uniquement en fin de processus d'injection. L'injection du matériau de charge se fait à partir du moule intérieur afin de remplir la zone 6 de la virole. Les techniques d'injection pour plusieurs composants connues de l'homme de l'art peuvent être appliquées en vue d'obtenir une stratification ou à tout le moins un gradient de concentration du matériau de charge depuis la surface intérieure 7.

Le matériau de charge peut être de différente nature, comme par exemple des microbilles creuses de verre ou de talc - porosité intrinsèque au matériau de charge - ou des microsphères de PTFE ou de tout autre polymère thermoplastique apte à passer en phase vapeur lors de la réticulation de la résine - porosité générée durant le traitement thermique de polymérisation. Le calibre ou la taille des particules est importante ainsi que la finesse du maillage de la nappe 3 car les deux sont choisis de sorte à ce que la nappe soit essentiellement imperméable aux particules du matériau de charge. Le nappage 3 permet ainsi un cloisonnement sélectif du volume de la virole selon son épaisseur. Le matériau de charge va donc se concentrer dans une couche à partir de la surface de contact 7 dont l'épaisseur sera déterminée par la position du nappage 3. Ce dernier forme une paroi poreuse ou perméable à la résine mais pas aux particules du matériau de charge.

Un traitement thermique est ensuite appliqué afin de durcir par polymérisation la résine de la virole. Lors de ce traitement thermique, le matériau des particules de charge va vaporiser, créant ainsi un nuage d'inclusions gazeuses dans la couche 6. Il sera important de bien sélectionner le matériau et de contrôler l'élévation de température afin que la résine ait déjà atteint une certaine viscosité avant le changement d'état, en particulier le passage en phase vapeur, afin d'éviter un dégazage trop important qui pourrait conduire à une porosité insuffisante.

La figure 2a est une vue en coupe d'un segment de la virole de la figure 1 avant polymérisation. On peut y voir les deux zones distinctes 5 et 6 délimitées par le nappage 3 faisant membrane. La zone 5 contient de la résine et les nappages de fibres et la zone 6 contient de la résine enrichie en particules de charges. La figure 2b est une vue correspondant à la figure 2a après polymérisation. La porosité dans la zone 6 est illustrée par les petites sphères vides de résine. Elles correspondent aux particules de charge qui ont vaporisé et par là grossi. Elles ont créé un nuage d'inclusions gazeuses dans la couche 6 depuis le nappage 3 jusqu'à la surface 7 conférant à cette surface et sa couche d'usure des propriétés d'abradabilité.

D'autres types de matériau de charge sont envisageables adhérant au même principe de création de porosité.

Comme déjà mentionné plus tôt, un matériau de charge formant un réseau de micro canaux dans la résine, stable chimiquement durant la polymérisation et apte à être enlevé par la suite est également envisageable. On pourrait utiliser des fibres métalliques, par exemple des fibres d'aluminium ou de cuivre. Dans ce cas, il n'est plus nécessaire de prévoir de paroi de cloisonnement mais il suffit de placer les fibres en question dans la zone destinée à être abradable. Les fibres métalliques restent chimiquement stables durant le traitement thermique et il convient ensuite de les retirer par dissolution dans un bain approprié. Les fibres d'aluminium pourraient être dissoutes dans un bain alcalin fort, par exemple un bain d'hydroxyde de sodium. Les fibres de cuivre pourraient être dissoutes dans un bain d'acide, par exemple un bain d'acide chlorhydrique. L'enlèvement du matériau de charge va générer une porosité dans la résine et lui conférer des propriétés d'abradabilité.

L'exemple décrit dans les figures concerne une virole externe de compresseur de turbomachine axiale. L'élément ne doit pas nécessairement être circulaire. Par exemple, on pourrait fabriquer une virole segmentée, c'est-à-dire une série de segments de virole. Il est clair que le principe décrit peut être appliqué à tout élément structurel ou composant de machine devant présenter au moins une surface avec des propriétés d'abradabilité.

## Revendications

1. Procédé de fabrication par moulage d'un élément structurel (5, 6) de stator de turbomachine axiale, l'élément structurel comportant une surface de friction (7) pouvant entrer en contact sous certaines conditions avec un élément mobile ; comprenant les étapes suivantes :
- mise en place d'un moule (1,2);
- remplissage du moule avec au moins un matériau sous forme pâteuse ou liquide constituant l'élément structurel ;
- traitement thermique de polymérisation du matériau; comprenant l'étape supplémentaire suivante :
- ajout d'au moins un matériau de charge au niveau de la surface de friction (7) avant le traitement thermique, le matériau de charge comprenant des particules solides; **caractérisé en ce que** le matériau de charge ayant la capacité à créer une porosité sur une épaisseur de l'élément structurel durant ou après le traitement thermique, la porosité conférant à la surface des propriétés d'abradabilité ; le matériau de charge comprenant une membrane perméable (3) à la résine et imperméable aux particules solides est placée dans le moule (1, 2) avant l'ajout du matériau de charge de sorte à limiter la présence du matériau de charge à proximité de la surface de friction de l'élément structurel.

2. Procédé de fabrication selon la revendication précédente, **caractérisé en ce que** la membrane (3) comprend des fibres, préférentiellement des fibres de verre ou de carbone.

3. Procédé de fabrication selon l'une des revendications 2 et 3, **caractérisé en ce que** le matériau de charge comprend au moins un des matériaux suivants : microbilles, préférentiellement creuses, de verre ; talc.

4. Procédé de fabrication selon la revendication 1, **caractérisé en ce que** le matériau de charge est tel qu'il se dégrade, préférentiellement qu'il passe en phase vapeur, lors du traitement thermique.

5. Procédé de fabrication selon l'une des revendications 2, 3 et 5, **caractérisé en ce que** le matériau de charge comprend au moins un des matériaux suivants :
microsphères de matériau thermoplastique, préférentiellement de PTFE ou tout autre polymère thermoplastique apte à passer en phase vapeur lors de la polymérisation de la résine.

6. Procédé de fabrication par moulage d'un élément structurel (5, 6) de stator de turbomachine axiale, l'élément structurel comportant une surface de friction (7) pouvant entrer en contact sous certaines conditions avec un élément mobile ; comprenant les étapes suivantes :
- mise en place d'un moule (1,2);
- remplissage du moule avec au moins un matériau sous forme pâteuse ou liquide constituant l'élément structurel ;
- traitement thermique de polymérisation du matériau; comprenant l'étape supplémentaire suivante :
ajout d'au moins un matériau de charge au niveau de la surface de friction (7) avant le traitement thermique, **caractérisé en ce que** le matériau de charge est fibreux métallique et **en ce que** le matériau de charge ayant la capacité à créer une porosité sur une épaisseur de l'élément structurel durant ou après le traitement thermique, la porosité conférant à la surface des propriétés d'abradabilité, et **en ce qu'**il comprend une étape supplémentaire après le traitement thermique consistant à dissoudre le matériau de charge fibreux métallique, par application d'un bain chimique approprié.

7. Procédé de fabrication selon la revendication 6, **caractérisé en ce que** les fibres du matériau de charge sont en aluminium et le bain chimique de dissolution est un bain alcalin fort, préférentiellement d'hydroxyde de sodium.

8. Procédé de fabrication selon la revendication 6, **caractérisé en ce que** les fibres du matériau de charge sont en cuivre et le bain chimique de dissolution est un bain acide, préférentiellement d'acide chlorhydrique.

9. Procédé de fabrication selon l'une des revendications précédentes, **caractérisé en ce que** l'élément structurel est une virole interne ou externe, préférentiellement de compresseur.

10. Procédé de fabrication selon l'une des revendications précédentes, **caractérisé en ce que** l'élément structurel (5, 6) est constitué de fibres structurantes, préférentiellement choisies parmi les suivantes : verre, carbone, métallique ; et de résine thermodurcissable.

## Patentansprüche

1. Verfahren zur Herstellung durch Formung eines Strukturelements (5, 6) eines axialen Turbomaschinenstators, wobei das Strukturelement eine Reibungsoberfläche (7) umfasst, die unter bestimmten Bedingungen mit einem bewegenden Element in Kontakt treten kann, umfassend die folgenden Schritte:
- Aufstellen einer Form (1, 2);
- Füllen der Form mit mindestens einem pastenartigen oder flüssigen Material, woraus sich das Strukturelement zusammensetzt;
- Wärmebehandeln des Materials durch Polymerisation; umfassend den folgenden zusätzlichen Schritt:
- Zusetzen mindestens eines Füllstoffs an der Reibungsoberfläche (7) vor der Wärmebehandlung, wobei der Füllstoff Feststoffpartikel umfasst;
**dadurch gekennzeichnet, dass** der Füllstoff die Fähigkeit hat, während oder nach der Wärmebehandlung Porosität an einer Dicke des Strukturelements zu erzeugen, wobei die Porosität die Oberfläche mit Abriebeigenschaften versieht; und eine Membran (3), die durchlässig für das Harz und undurchlässig für die Feststoffpartikel ist, in der Form (1, 2) angeordnet wird, bevor der Füllstoff zugesetzt wird, um das Vorhandensein des Füllstoffs in der Nähe der Reibungsoberfläche des Strukturelements zu beschränken.

2. Herstellungsverfahren nach dem vorhergehenden Anspruch, **dadurch gekennzeichnet, dass** die Membran (3) Fasern, bevorzugt Glas- oder Kohlenstoff-Fasern, umfasst.

3. Herstellungsverfahren nach einem der Ansprüche 1 und 2, **dadurch gekennzeichnet, dass** der Füllstoff mindestens eines der folgenden Materialien umfasst: Mikroperlchen, bevorzugt hohl, aus Glas; Talk.

4. Herstellungsverfahren nach Anspruch 1, **dadurch gekennzeichnet, dass** der Füllstoff derart ist, dass er sich während der Wärmebehandlung zersetzt, bevorzugt in Dampfphase übergeht.

5. Herstellungsverfahren nach einem der Ansprüche 1 bis 3, **dadurch gekennzeichnet, dass** der Füllstoff mindestens eines der folgenden Materialien umfasst: Mikrokügelchen aus thermoplastischem Material, bevorzugt PTFE oder anderes thermoplastisches Polymer, das für den Übergang in die Dampfphase während der Polymerisation des Harzes geeignet ist.

6. Verfahren zur Herstellung durch Formung eines Strukturelements (5, 6) eines axialen Turbomaschinenstators, wobei das Strukturelement eine Reibungsoberfläche (7) umfasst, die unter bestimmten Bedingungen mit einem bewegenden Element in Kontakt treten kann, umfassend die folgenden Schritte:
- Aufstellen einer Form (1, 2);
- Füllen der Form mit mindestens einem pastenartigen oder flüssigen Material, woraus sich das Strukturelement zusammensetzt;
- Wärmebehandeln des Materials durch Polymerisation; umfassend den folgenden zusätzlichen Schritt:
- Zusetzen mindestens eines Füllstoffs an der Reibungsoberfläche (7) vor der Wärmebehandlung;
**dadurch gekennzeichnet, dass** der Füllstoff faserartig und metallisch ist; dass der Füllstoff die Fähigkeit hat, während oder nach der Wärmebehandlung Porosität an einer Dicke des Strukturelements zu erzeugen, wobei die Porosität die Oberfläche mit Abriebeigenschaften versieht; und dass es einen zusätzlichen Schritt nach der Wärmebehandlung umfasst, der daraus besteht, den metallischen faserartigen Füllstoff durch Anwendung eines geeigneten chemischen Bades aufzulösen.

7. Herstellungsverfahren nach Anspruch 6, **dadurch gekennzeichnet, dass** die Fasern des Füllstoffs aus Aluminium bestehen und das chemische Auflösungsbad ein starkes alkalisches Bad, bevorzugt von Natriumhydroxid, ist.

8. Herstellungsverfahren nach Anspruch 6, **dadurch gekennzeichnet, dass** die Fasern des Füllstoffs aus Kupfer bestehen und das chemische Auflösungsbad ein Säurebad, bevorzugt von Salzsäure, ist.

9. Herstellungsverfahren nach einem der vorhergehenden Ansprüche, **dadurch gekennzeichnet, dass** das Strukturelement eine innere oder äußere Ummantelung, bevorzugt eines Verdichters, ist.

10. Herstellungsverfahren nach einem der vorhergehenden Ansprüche, **dadurch gekennzeichnet, dass** das Strukturelement (5, 6) aus strukturgebenden Fasern zusammengesetzt ist, bevorzugt ausgewählt aus den folgenden: Glas, Kohlenstoff, Metall und wärmehärtbarem Harz.

## Claims

1. A method for manufacturing by molding a structural element (5, 6) of an axial turbine engine stator, the structural element comprising a friction surface (7) which may contact a moving element under certain conditions, comprising the following steps:
- setting up a mold (1, 2);
- filling the mold with at least one paste-like or liquid material composing the structural element;
- heat treating the material by polymerization;
comprising the following additional step:
- adding at least one filler material at the friction surface (7) before heat treatment, the filler material comprising solid particles;
**characterized in that** the filler material is capable of creating porosity on a thickness of the structural element during or after heat treatment, with the porosity providing the surface with properties of abradability; and a membrane (3) permeable to the resin and impermeable to the solid particles is placed inside the mold (1, 2) before adding the filler material so as to limit the presence of the filler material near the friction surface of the structural element.

2. The manufacturing method according to the preceding claim, **characterized in that** the membrane (3) comprises fibers, preferably glass or carbon fibers.

3. The manufacturing method according to any of claims 1 and 2, **characterized in that** the filler material comprises at least one of the following materials: microbeads, preferably hollow, of glass; talc.

4. The manufacturing method according to claim 1, **characterized in that** the filler material is such that it disintegrates, preferably transitioning to vapor phase, during heat treatment.

5. The manufacturing method according to any of claims 1 to 3, **characterized in that** the filler material comprises at least one of the following materials: microspheres of thermoplastic material, preferably PTFE or any other thermoplastic polymer adapted to transition to vapor phase during polymerization of the resin.

6. A method for manufacturing by molding a structural element (5, 6) of an axial turbine engine stator, the structural element comprising a friction surface (7) which may contact a moving element under certain conditions, comprising the following steps:
- setting up a mold (1, 2);
- filling the mold with at least one paste-like or liquid material composing the structural element;
- heat treating the material by polymerization;
comprising the following additional step:
- adding at least one filler material at the friction surface (7) before heat treatment;
**characterized in that** the filler material is fibrous and metallic; **in that** the filler material is capable of creating porosity on a thickness of the structural element during or after heat treatment, with the porosity providing the surface with properties of abradability; and **in that** it comprises an additional step after the heat treatment consisting in dissolving the metallic fibrous filler material through application of an appropriate chemical bath.

7. The manufacturing method according to claim 6, **characterized in that** the fibers of the filler material are of aluminum, and the chemical dissolution bath is a strong alkaline bath, preferably of sodium hydroxide.

8. The manufacturing method according to claim 6, **characterized in that** the fibers of the filler material are of copper, and the chemical dissolution bath is an acid bath, preferably of hydrochloric acid.

9. The manufacturing method according to any of the preceding claims, **characterized in that** the structural element is an inner or outer shroud, preferably of a compressor.

10. The manufacturing method according to any of the preceding claims, **characterized in that** the structural element (5, 6) is composed of texturing fibers, preferably chosen among the following: glass, carbon, metal, and thermosetting resin.
